# EUROPÄISCHE PATENTSCHRIFT

(11) **EP 1 052 436 B1**
(45) Veröffentlichungstag und Bekanntmachung des Hinweises auf die Patenterteilung: **16.04.2003**
(21) Anmeldenummer: 00109829.2
(22) Anmeldetag: 09.05.2000
(51) Int. Cl.: F16J 15/32

(54) **Dichtung**
Seal
Joint

(30) Priorität: 12.05.1999 DE 19921696
(43) Veröffentlichungstag der Anmeldung: 15.11.2000
(73) Patentinhaber: Fietz GmbH, 52399 Burscheid (DE)
(72) Erfinder: Fietz, Manfred, 51399 Burscheid (DE)
(74) Vertreter: Paul, Dieter-Alfred, Dipl.-Ing.

(56) Entgegenhaltungen:
- DE-A- 3 606 886
- DE-A- 3 828 692
- DE-A- 4 106 159
- DE-A- 19 611 673
- DE-U- 29 908 968
- US-A- 5 249 813

## Beschreibung

Die Erfindung betrifft eine Dichtung für die Abdichtung zwischen zwei relativ und linear zueinander beweglichen Vorrichtungsteilen mit einem ersten Vorrichtungsteil, das eine zylindrische Gleitfläche für die Anlage der Dichtung aufweist, und mit einem zweiten Vorrichtungsteil, das eine zur Gleitfläche hin offene Ringnut für den Einbau der Dichtung hat, wobei die Dichtung einen Dichtring aus einem Kunststoff und einen Vorspannring aus einem gummielastischen Material aufweist und eine Umfangsfläche des Dichtrings als Dichtfläche und die dazu abgewandte Umfangsfläche als Stützfläche für die Anlage des Vorspannrings ausgebildet sind und wobei ferner die Dichtfläche durch eine radial vorstehende Dichtkante in einen konischen Niederdruckabschnitt mit kleinem Konuswinkel und in einen konusartigen Hochdruckabschnitt mit großem Konuswinkel aufgeteilt ist.

Dichtungen der vorgenannten Art werden - anders als Dichtungen für Druckspeicher (vgl. CH-A-461 203) - dort eingesetzt, wo auf der einen Dichtungsseite hoher Druck und auf der anderen Dichtungsseite niedriger Druck, insbesondere Atmosphärendruck, anliegen. Sie sind deshalb grundsätzlich asymmetrisch in der Weise gestaltet, daß der Dichtring eine Dichtfläche aufweist, die durch eine radial vorstehende Dichtkante in einen Niederdruckabschnitt und einen Hochdruckabschnitt aufgeteilt ist, wobei der Niederdruckabschnitt leicht konisch mit kleinem Konuswinkel ausgebildet ist.

Anfang der 70er Jahre setzte sich der sogenannte Stufendichtring durch, bei dem der Hochdruckabschnitt stufenartig ausgebildet ist (vgl. DE-B-23 25 000, DE-A-30 26 063). Als Vorzug dieses Stufenrings wurde angegeben, daß an der Dichtkante eine nur sehr kurze Berührungsfläche vorhanden ist und deshalb eine hohe Flächenpressung mit steil ansteigendem Druckgradienten erzielt wird. Hierdurch sollte eine hervorragende Abdichtung, die auch bei Verschleiß nicht nennenswert leidet, erzielt werden. Der Stufenring ist später durch Anbringung einer Phase an der Dichtkante modifiziert worden (vgl. DE-C-32 25 906). In der Folgezeit sind weitere Modifikationen vorgenommen worden (vgl. DE-C-38 28 692, US-A-4 917 390), wobei jedoch das Grundprinzip der Stufenausbildung beibehalten wurde.

In der DE-C-41 40 833 und der US-A-5 104 131 sind neben Stufenringdichtungen auch Dichtringformen offenbart, bei denen der Hochdruckabschnitt konusartig ausgebildet ist. Um auch bei dieser Ausbildung eine ähnliche Wirkung zu erreichen wie bei den Stufenringdichtungen, sind zumindest im Bereich der Dichtkante große Konuswinkel im Bereich von 50 bis 60° in bezug auf die Axiale vorgesehen worden. Eine Modifikation hierzu ist der US-A-5 249 813 zu entnehmen, in der ein Dichtring mit einem Hochdruckabschnitt offenbart ist, bei der der Konus bogenförmig gestaltet ist. Auch hier ist ein Konuswinkel von 50 und mehr Grad vorgesehen.

Trotz der zahlreichen Versuche, zu einer optimalen Lösung insbesondere bezüglich der Abdichteigenschaften zu kommen, ist Verbesserungsbedarf geblieben. Der Erfindung liegt somit die Aufgabe zugrunde, eine Dichtung so zu gestalten, daß mit ihr eine noch bessere Abdichtung erzielt wird, die auch bei großem Druck und bei erhöhter Temperatur möglichst weitgehend erhalten bleibt.

Diese Aufgabe wird erfindungsgemäß dadurch gelöst, daß an dem Hochdruckabschnitt ein Konuswinkel vorgesehen wird, der zumindest im Bereich der Dichtkante in bezug auf die Axiale nicht kleiner als 20° und nicht größer als 40°, vorzugsweise nicht kleiner als 25° und nicht größer 30° ist. Grundgedanke der Erfindung ist es also, von dem Prinzip der Stufenringdichtung, nämlich dem steilen bis senkrechten Anstieg des Hochdruckabschnitts im Bereich der Dichtkante, abzuweichen, indem der Hochdruckabschnitt konusartig mit einem relativ kleinen Konuswinkel ausgebildet wird. Versuche haben gezeigt, daß mit solchen Dichtungen ein höherer Anpreßdruck erzielt und insbesondere der Druckgradient gesteigert wird. Beides hat eine wesentlich verbesserte Abdichtwirkung zur Folge. Dies überrascht deshalb, weil es bisher zum Grundverständnis des Fachmanns auf diesem Gebiet gehörte, daß der Hochdruckabschnitt im Bereich der Dichtkante steil ansteigen muß, damit über den Vorspannring eine möglichst hohe Flächenpressung an der Dichtkante erzielt wird.

Der große Konuswinkel kann über den gesamten Hochdruckabschnitt gleich ausgebildet sein. Es ist jedoch auch eine bogenförmige oder andere Gestaltung des Hochdruckabschnittes möglich, soweit der Konuswinkel im Bereich der Dichtkante innerhalb des oben genannten Bereichs bleibt.

In an sich bekannter Weise kann der Dichtring eine sich im wesentlichen senkrecht zur Axialen erstreckende Frontseite aufweisen, die sich zwischen Hochdruckabschnitt und Stützfläche erstreckt. Auch hat es sich als für die Dichtwirkung zweckmäßig erwiesen, daß sich die Stützfläche in axialer Richtung im wesentlichen parallel zur Axialen erstreckt. Der Vorspannring muß keine besondere Formgebung aufweisen, kann also den üblichen kreisförmigen Querschnitt haben.

Eine Verbesserung der Abdichtwirkung wird auch dadurch erreicht, daß der Radius an der Dichtkante möglichst klein, d. h. unter 0,3 mm gehalten wird. Hierdurch wird der Druckgradient auf der Druckseite weiter gesteigert.

Auch der kleine Konuswinkel ist nicht ohne Einfluß auf das Abdichtverhalten. Er sollte in bezug auf die Axiale nicht größer als 5° sein. Dabei ist es nicht erforderlich, wenn auch zweckmäßig, wenn der kleine Konuswinkel über den gesamten Niederdruckabschnitt im wesentlichen gleich ist. Stattdessen kommt auch eine parabelförmige Ausbildung in Frage, sofern der kleine Konuswinkel im Bereich der Dichtkante bei 5° oder darunter liegt.

In weiterer Ausgestaltung der Erfindung ist vorgesehen, daß der Dichtring eine sich im wesentlichen senkrecht zur Axialen erstreckende Rückseite aufweist, die sich zwischen Niederdruckabschnitt der Dichtfläche und der Stützfläche erstreckt. Dabei hat es sich als günstig erwiesen, wenn zwischen Niederdruckabschnitt und Rückseite eine Fase oder Rundung ausgebildet wird. Auch sollte die Rückseite zumindest teilweise eine zur Dichtfläche hin einwärts gerichtete Schräge aufweisen, die eine Winkel von nicht mehr als 5° zur Radialen hat. Auch hierdurch wird der Druckgradient verbessert. Außerdem wird eine höhere Konstanz der Abdichtwirkung erreicht, da durch die Schräge die Neigung zum Kippen vermindert wird.

Auch die Lage der Dichtkante ist für das Abdichtverhalten nicht ohne Bedeutung. Als zweckmäßig hat es sich erwiesen, das Verhältnis von axialer Erstreckung des Hochdruckabschnitts und des Niederdruckabschnitts zwischen 1:1 und 1:2, vorzugsweise im Bereich 1:1,5, vorzusehen, d. h. die Dichtkante sollte gegenüber der Mittelebene des Dichtrings leicht zur Hochdruckseite hin verschoben sein.

In der zeichnung ist die Erfindung anhand eines Ausführungsbeispiels näher veranschaulicht. Es zeigen:
- Fig. 1: einen Längsschnitt durch eine Dichtungsanordnung mit der erfindungsgemäßen Dichtung und
- Fig. 2: einen Schnitt durch den Dichtring der Dichtung gemäß Fig. 1.

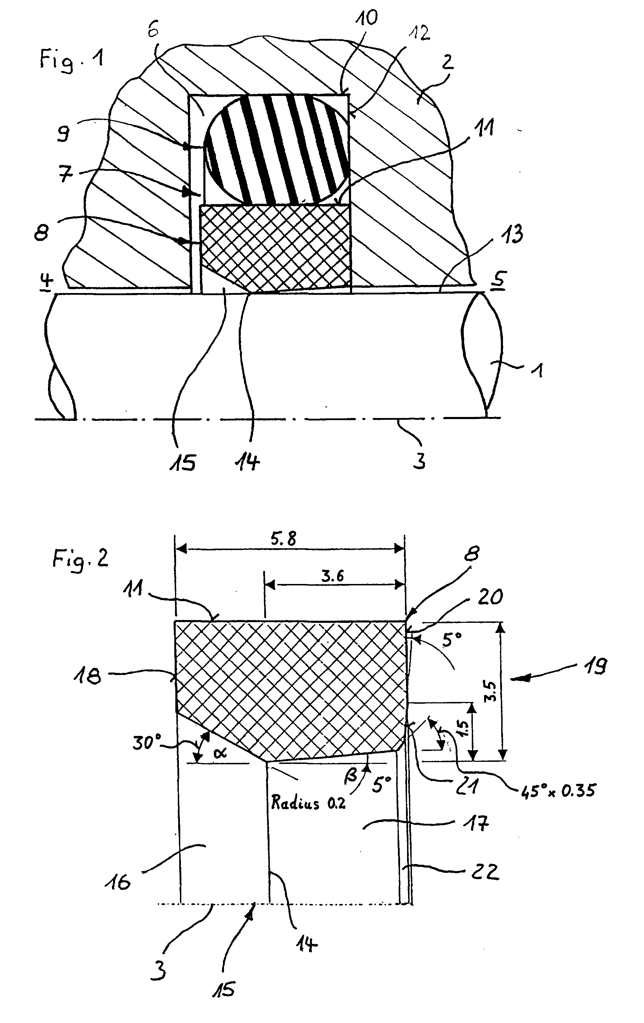

Fig. 1 zeigt die obere Hälfte einer Kolbenstange 1, die in einem sie umgebenden Gehäuse 2 verschieblich, d. h. in Richtung der Axialen 3, gelagert ist. Kolbenstange 1 und Gehäuse 2 können Teil beispielsweise eine Druckzylinders sein, wobei mit 4 die Hochdruckseite und mit 5 die Niederdruckseite bezeichnet sind.

Das Gehäuse 2 weist eine die Kolbenstange 1 umgebende Ringnut 6 rechteckigen Querschnitts auf, die zur Kolbenstange 1 hin offen ist. In der Ringnut 6 ist eine insgesamt mit 7 bezeichnete Dichtung eingesetzt, die zweiteilig ausgebildet ist. Sie besteht aus einem Dichtring 8 und einem diesen umgebenden Vorspannring 9. Der Dichtring 8 besteht aus PTFE und der Vorspannring 9 aus einem Elastomer. Der Vorspannring 9 liegt einerseits am Nutgrund 10 und andererseits am Außenumfang, d. h. der Stützfläche 11 des Dichtrings 8 an und ist oval verformt. Dichtring 8 und Vorspannring 9 werden durch den von der Hochdruckseite 4 einwirkenden Druck gegen die niederdruckseitige Nutwandung 12 gepreßt. Gleichzeitig sorgt dieser Druck zusammen mit dem Vorspannring 9 für eine Anlage des Dichtrings 8 an der Gleitfläche 13 der Kolbenstange 1, und zwar im Bereich einer Dichtkante 14, die an der Dichtfläche 15 des Dichtrings 8 radial nach innen vorsteht. Die Dichtkante 14 bewirkt die Abdichtung zwischen Hochdruckseite 4 und Niederdruckseite 5.

Die Geometrie des Dichtrings 8 ist detaillierter in Fig. 2 zu sehen, in der auch Maße (in mm) und Winkel angegeben sind. Die Dichtkante 14 teilt die Dichtfläche 15 in einen Hochdruckabschnitt 16 mit einer axialen Erstreckung von 2,2 mm und einen Niederdruckabschnitt 17 mit einer axialen Erstreckung von 3,6 mm auf. Der Hochdruckabschnitt 16 ist konusartig mit einem Konuswinkel α von 30° ausgebildet. Er geht in eine sich senkrecht zur Axialen 3 erstreckende Frontseite 18 über, die bis zur Stützfläche 11 reicht.

Der Niederdruckabschnitt 17 ist ebenfalls konusartig ausgebildet, jedoch mit einem Konuswinkel β gegenüber der Axialen 3 von nur 5°. Die Dichtkante 14 hat einen Radius von 0,2 mm.

Zwischen Stützfläche 11 und Niederdruckabschnitt 17 erstreckt sich die Rückseite 19 des Dichtrings 8. Die Rückseite 19 ist aufgeteilt in einen ersten, von der Stützfläche 11 nach innen gerichteten Abschnitt 20 und einen sich daran nach innen anschließenden zweiten Abschnitt 21. Der erste Abschnitt 20 liegt in einer zur Axialen 3 senkrechten Ebene, während der zweite Abschnitt 21 als eine einwärts gerichtete Schräge ausgebildet ist, wobei der Winkel 5° beträgt. Den Übergang des zweiten Abschnittes 21 im Niederdruckabschnitt 17 bildet eine Phase 22 mit 45° Neigung.

## Patentansprüche

1. Dichtung (7) für die Abdichtung zwischen zwei relativ und linear zueinander beweglichen Vorrichtungsteilen (1, 2) mit einem ersten Vorrichtungsteil (1), das eine zylindrische Gleitfläche (13) für die Anlage der Dichtung (7) aufweist, und mit einem zweiten Vorrichtungsteil (2), das eine zur Gleitfläche (13) hin offene Ringnut (6) für den Einbau der Dichtung (7) hat, wobei die Dichtung (7) einen Dichtring (8) aus einem Kunststoff und einen Vorspannring (9) aus einem gummielastischen Material aufweist und eine Umfangsfläche des Dichtrings (8) als Dichtfläche (15) und die dazu abgewandte Umfangsfläche als Stützfläche (11) für die Anlage des Vorspannrings (9) ausgebildet sind und wobei ferner die Dichtfläche (15) durch eine radial vorstehende Dichtkante (14) in einen konischen Niederdruckabschnitt (17) mit einem ersten kleinen Konuswinkel (β) und einem konusartigen Hochdruckabschnitt (16) mit einem zweiten größeren Konuswinkel (α) aufgeteilt ist, sich die Stützfläche (11) in axialer Richtung im wesentlichen parallel zur Axialen (3) erstreckt und der Dichtring (8) eine sich im wesentlichen senkrecht zur Axialen (3) erstreckende Rückseite (19) aufweist, die sich zwischen Niederdruckabschnitt (17) und Stützfläche (11) erstreckt, **dadurch gekennzeichnet, daß** der große Konuswinkel (α) zumindest im Bereich der Dichtkante (14) in bezug auf die Axiale (3) nicht kleiner als 25° und nicht größer als 35° ist, daß der kleine Konuswinkel (β) in bezug auf die Axiale (3) nicht größer als 5° ist und daß die Rückseite (19) zumindest teilweise eine zur Dichtfläche (15) hin einwärts gerichtete Schräge (21) aufweist, die einen Winkel von nicht mehr als 5° zur Radialen hat.

2. Dichtung nach Anspruch 1, **dadurch gekennzeichnet, daß** der größere Konuswinkel (α) über dem gesamten Hochdruckabschnitt (16) gleich ist.

3. Dichtung nach Anspruch 1 oder 2, **dadurch gekennzeichnet, daß** der Dichtring (8) eine sich im wesentlichen senkrecht zur Axialen (3) erstreckende Frontseite (18) aufweist, die sich zwischen Hochdruckabschnitt (16) und Stützfläche (11) erstreckt.

4. Dichtung nach einem der Ansprüche 1 bis 3, **dadurch gekennzeichnet, daß** der Vorspannring (9) kreisförmigen Querschnitt hat.

5. Dichtung nach einem der Ansprüche 1 bis 4, **dadurch gekennzeichnet, daß** der Radius an der Dichtkante (14) unter 0,3 mm liegt.

6. Dichtung nach einem der Ansprüche 1 bis 5, **dadurch gekennzeichnet, daß** der kleine Konuswinkel (β) über den gesamten Niederdruckabschnitt (17) im wesentlichen gleich ist.

7. Dichtung nach einem der Ansprüche 1 bis 6, **dadurch gekennzeichnet, daß** zwischen Niederdruckabschnitt (17) und Rückseite (19) eine Fase (22) ausgebildet ist.

8. Dichtung nach einem der Ansprüche 1 bis 7, **dadurch gekennzeichnet, daß** das Verhältnis von axialer Erstreckung des Hochdruckabschnitts (16) und des Niederdruckabschnitts (17) zwischen 1:1 und 1:2 liegt.

## Claims

1. A seal (7) for sealing between two components (1, 2) of a device which are linearly movable with respect to one another, the device comprising a first component (1) which has a cylindrical sliding surface (13) for contact with the seal (7) and a second component (2) which has an annular groove (6) open towards the sliding surface (13) for receiving the seal (7), the seal (7) comprising a sealing ring (8) made of a plastics material and a preloading ring (9) made of a rubber-elastic material, one circumferential face of the sealing ring (8) being configured as a sealing face (15) while the opposed circumferential face is configured as a support face (11) for abutment against the preloading ring (9), and the sealing face (15) being divided by a radially projecting sealing edge (14) into a conical low-pressure section (17) having a first, small cone angle (β) and a conoid high-pressure section (16) having a second, larger cone angle (α), the support face (11) extending in the axial direction substantially parallel to the axial (3) and the sealing ring (8) having a rear face (19) extending substantially perpendicularly to the axial (3) and extending between the low-pressure section (17) and the support face (11), **characterised in that** at least in the area of the sealing edge (14) the large cone angle (α) is not less than 25° and not more than 35° with respect to the axial (3), **in that** the small cone angle (β) is not more than 5° with respect to the axial (3), and **in that** the rear face (19) has at least partially an incline (21) orientated inwardly with respect to the sealing face (15) and having an angle of not more then 5° to the radial.

2. A seal according to Claim 1, **characterised in that** the larger cone angle (α) is equal over the entire high-pressure section (16).

3. A seal according to Claim 1 or 2, **characterised In that** the sealing ring (8) has a front face (18) extending substantially perpendicularly to the axial (3) and extending between the high-pressure section (16) and the support face (11).

4. A seal according to any one of claims 1 to 3, **characterised in that** the preloading ring (9) has a circular cross-section.

5. A seal according to any one of claims 1 to 4, **characterised in that** the radius at the sealing edge (14) is less than 0.3 mm.

6. A seal according to any one of claims 1 to 5, **characterised in that** the small cone angle (β) is substantially equal over the entire low-pressure section (17).

7. A seal according to any one of claims 1 to 6, **characterised in that** a chamfer (22) is formed between the low-pressure section (17) and the rear face (19).

8. A sealing ring according to any one of claims 1 to 7, **characterised in that** the ratio of axial extension of the high-pressure section (16) to the low-pressure section (17) is between 1 : 1 and 1 : 2.

## Revendications

1. Joint (7) pour l'étanchéité entre deux parties de dispositif (1, 2) déplaçables de manière relative et linéaire l'une par rapport à l'autre, avec une première partie de dispositif (1) qui comporte une surface de glissement cylindrique (13) pour l'installation du joint (7) et avec une seconde partie de dispositif (2) qui comporte une rainure annulaire (6) ouverte vers la surface de glissement (13) pour le montage du joint (7), moyennant quoi le joint (7) comporte une bague d'étanchéité (8) fait d'une matière plastique et un anneau de précontrainte (9) fait d'une matière de caoutchouc élastique et une surface périphérique de la bague d'étanchéité (8) est formée comme surface d'étanchéité (15) et la surface périphérique opposée à celle-ci est formée comme surface d'appui (11) pour l'installation de l'anneau de précontrainte (9) et, en outre, moyennant quoi la surface d'étanchéité (15) est divisée, par une arête d'étanchéité (14) saillant dans le sens radial, en un tronçon conique basse pression (17) avec un premier petit angle de conicité (β) et en un tronçon haute pression de type conique (16) avec un second angle de conicité (α) plus grand, la surface d'appui (11) s'étend, dans le sens axial, essentiellement parallèlement à la ligne axiale (3) et la bague d'étanchéité (8) comporte une face arrière (19) s'étendant essentiellement perpendiculairement à la ligne axiale (3), qui s'étend entre le tronçon conique basse pression (17) et la surface d'appui (11), **caractérisé en ce que** le grand angle de conicité (α), au moins dans la zone de l'arête d'étanchéité (14), n'est pas inférieur à 25° et pas supérieur à 35° par rapport à la ligne axiale (3), **en ce que** le petit angle de conicité (β) n'est pas supérieur à 5° par rapport à la ligne axiale (3) et **en ce que** la face arrière (19) comporte au moins partiellement une inclinaison (21) dirigée vers le dedans par rapport à la surface d'étanchéité (15) qui présente un angle qui n'est pas supérieur à 5° par rapport à la ligne radiale.

2. Joint selon la revendication 1, **caractérisé en ce que** le plus grand angle de conicité (α) est égal sur l'ensemble du tronçon haute pression (16).

3. Joint selon la revendication 1 ou 2, **caractérisé en ce que** la bague d'étanchéité (8) comporte une face frontale (18) s'étendant essentiellement perpendiculairement à la ligne axiale (3), qui s'étend entre le tronçon haute pression (16) et la surface d'appui (11).

4. Joint selon l'une quelconque des revendications 1 à 3, **caractérisé en ce que** la bague de précontrainte (9) présente une section transversale circulaire.

5. Joint selon l'une quelconque des revendications 1 à 4, **caractérisé en ce que** le rayon à l'arête d'étanchéité (14) est inférieur à 0,3 mm.

6. Joint selon l'une quelconque des revendications 1 à 5, **caractérisé en ce que** le petit angle de conicité (β) est sensiblement égal sur l'ensemble du tronçon basse pression (17).

7. Joint selon l'une quelconque des revendications 1 à 6, **caractérisé en ce qu'**un chanfrein (22) est formé entre le tronçon basse pression (17) et la face arrière (19).

8. Joint selon l'une quelconque des revendications 1 à 7, **caractérisé en ce que** le rapport d'extension axiale du tronçon haute pression (16) et du tronçon basse pression (17) est compris entre 1:1 et 1:2.
